Europäisches Patentamt

European Patent Office

Office européen des brevets

(19)

(11) **EP 0 826 414 A2**

(12) **EUROPÄISCHE PATENTANMELDUNG**

(43) Veröffentlichungstag:
04.03.1998 Patentblatt 1998/10

(51) Int. Cl.$^6$: **B01J 2/30**, C11D 3/39

(21) Anmeldenummer: 97114238.5

(22) Anmeldetag: 18.08.1997

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: 26.08.1996 DE 19634421

(71) Anmelder:
**Henkel Kommanditgesellschaft auf Aktien**
**40589 Düsseldorf-Holthausen (DE)**

(72) Erfinder:
**Gassenmeier, Thomas Otto, Dr.**
**40229 Düsseldorf (DE)**

(54) **Verfahren zur Hydrophobierung von partikulärem Material**

(57) Durch Auftrag einer PIT-Emulsion aus

(1) 10 bis 80 Gew.-% eines festen Hydrophobierungsmittels,
(2) 0,5 bis 30 Gew.-% eines hydrophilen nichtionischen Dispergators und
(3) 1 bis 30 Gew.-% eines hydrophoben Co-Dispergators

bezogen jeweils auf die Mischung der festen Komponenten, in 15 bis 85 Gew.-% Wasser, bezogen auf die PIT-Emulsion und bei einem Verhältnis der Komponenten (2) und (3) von 0,5 : 1 bis 20 : 1 auf partikuläres Material kann dieses hydrophobiert und somit löSeverzögert werden. Das Verfahren eignet sich insbesondere, aber nicht ausschließlich, zur Hydrophobierung und Löseverzögerung von Wasch- und Reinigungsmittel-inhaltsstoffen, insbesondere Bleichkomponenten, die auf diese Weise beschichtet ebenfalls Gegenstand der Erfindung sind.

Printed by Xerox (UK) Business Services
2.15.12/3.4

EP 0 826 414 A2

**Beschreibung**

Die Erfindung betrifft ein Verfahren zur Hydrophobierung von teilchenförmigem Material durch Auftrag eines oder mehrerer bei Raumtemperatur fester Hydrophobierungsmittel in Form von PIT-Emulsionen.

Bei der Herstellung von Wasch- und Reinigungsmitteln sind verschiedene Methoden der Oberflächenbehandlung zur Hydrophobierung und damit Verringerung des „Zusammenbackens" gesicherter Stand der Technik. Ein weiterer Vorteil dieser Oberflächenbehandlung ist die Möglichkeit, einzelne Wasch- und Reinigungsmittelinhaltsstoffe verzögert an die Waschtlotte abzugeben und so beispielsweise die enzymatische Reinigung von der oxidativen Bleiche zu trennen. So werden z.B. wäßrige Dispersionen hydrophobierender Substanzen oder Lösungen solcher Substanzen in organischen Lösungsmitteln auf die Wasch- und Reinigungsmittelgranulate aufgesprüht, wobei das Dispersions- bzw. Lösungsmittel verdampft wird, oder die fertigen Granulate werden mit feinteiligem Hydrophobierungsmittel „abgepudert" oder einer Schmelze des Hydrophobierungsmittels überzogen.

Bei der Auftragung wäßriger Dispersionen stellt die Tendenz zur Entmischung einiger Dispersionstypen ein technisches Problem dar, so daß die Dispersion parallel zu ihrem Verbrauch hergestellt oder durch geeignete Maßnahmen stabilisiert werden muß. Wird das Hydrophobierungsmittel in organischen Lösungsmitteln gelöst, so sind bei der Verdampfung umfangreiche Maßnahmen zum Umweltschutz und gegebenenfalls zur Arbeitssicherheit (zum Beispiel Ex-Schutz bei brennbaren Lösungsmitteln) erforderlich. Bei der Oberflächenbehandlung mit feinteiligen Feststoffen ist die Teilchengröße des Hydrophobierungsmittels deutlich größer als in Dispersionen, so daß der Materialverbrauch steigt. Die Auftragung fester Hydrophobierungsmittel über den Zustand der Schmelze gelingt nur bei geeigneten Mitteln, zum Beispiel Wachsen, und erfordert zum einem eine ständige Temperierung in der Zerstäubungseinrichtung, zum anderen stellt der Energieverbrauch dieses Verfahrens einen kritischen Parameter dar.

Es ist bekannt, daß Öl-in-Wasser-Emulsionen, fortan O/W-Emulsionen genannt, die mit nichtionogenen Emulgatoren hergestellt und stabilisiert sind, beim Erwärmen eine Phaseninversion erleiden, d.h., daß bei höheren Temperaturen die äußere, wäßrige Phase zur inneren Phase werden kann. Dieser Vorgang ist in der Regel reversibel, d.h., daß sich beim Abkühlen wieder der ursprüngliche Emulsionstyp zurückbildet. Es ist auch bekannt, daß die Lage der Phaseninversionstemperatur (PIT) von vielen Faktoren abhängig ist, zum Beispiel von der Art und dem Phasenvolumen der Ölkomponente, von der Hydrophilie und der Struktur des Emulgators oder der Zusammensetzung des Emulgatorsystems. Weiterhin ist es bekannt, daß Emulsionen, die bei oder wenig unterhalb der Phaseninversionstemperatur hergestellt werden, sich durch besondere Stabilität und Feinteiligkeit auszeichnen, während solche, die oberhalb der Phaseninversionstemperatur hergestellt werden, weniger feinteilig sind. Emulsionen, die bei einer bestimmten Temperatur Phaseninversion erleiden, werden PIT-Emulsionen genannt.

Die DE -A- 38 19 193 offenbart ein Verfahren zur Herstellung niedrigviskoser O/W-Emulsionen mittels der Phaseninversionstechnik. Hierin wird diese Technik auf Mischungen angewandt, die eine Ölkomponente, einen nichtionischen Emulgator und einen Coemulgator in wäßrigem Milieu enthalten. Die Ölkomponente soll dabei aus 50 - 100 Gew.-% spezieller Mono- bzw. Diester, 0 - 50 Gew.-% $C_8$ - $C_{22}$-Fettsäuretriglyceriden und gegebenenfalls 0 - 25 Gew.-% eines Kohlenwasserstofföls bestehen. Die DE -A- 38 19 193 offenbart über die genannten Bestandteile hinaus keine weiteren Komponenten und nennt keinen Verwendungszweck der hergestellten Emulsionen.

Aus der WO -A- 95/11936 ist ein Verfahren zur Herstellung feinsdisperser und langzeitstabiler Wachsdispersionen durch PIT-Emulgierung bekannt, wobei unter Wachsen natürlich oder künstlich gewonnene Stoffe verstanden werden, die bei 20°C fest und knetbar, grob- bis feinkristallin sind und erst oberhalb von etwa 40°C ohne Zersetzung in einen fließfähigen niedriger viskosen Zustand übergehen. Die offenbarten Emulsionen enthalten dabei 10 - 80 Gew.-% eines Wachses, 0,5 - 30 Gew.-% eines hydrophilen nichtionischen Dispergators mit einem HLB-Wert von 8 bis 18 sowie 1 bis 30 Gew.-% eines hydrophoben Co-Dispergators aus der Gruppe der Fettalkohole mit 12 bis 22 Kohlenstoffatomen oder der Partialester von Polyolen mit 3 bis 6 Kohlenstoffatomen mit Fettsäuren mit 12 bis 22 C-Atomen. Die WO -A- 95/11936 offenbart als Verwendungszweck der hergestellten PIT-Emulsionen kosmetische Verwendung als Haut- oder Körperpflegemittel oder die textile Ausrüstung (Avivage).

Die DE -A- 38 19 193 sowie die WO -A- 95/11936 offenbaren über die genannten Verwendungen hinaus keine weiteren Bestimmungszwecke. Insbesondere enthalten diese Druckschriften keinen Hinweis auf die Verwendung von PIT-Emulsionen zur Beschichtung von partikulärem Material mit dem Ziel der Hydrophobierung.

Aufgabe der vorliegenden Erfindung war es, ein verbessertes Verfahren zur Hydrophobierung von pärtikulärem Material mit bei Raumtemperatur festen Hydrophobierungsmitteln zu entwickeln.

Diese Aufgabe wurde erfindungsgemäß dadurch gelöst, daß man eine PIT-Emulsion aus

(1) 10 bis 80 Gew.-% eines festen Hydrophobierungsmittels,

(2) 0,5 bis 30 Gew.-% eines hydrophilen nichtionischen Dispergators und

(3) 1 bis 30 Gew.-% eines hydrophoben Co-Dispergators,

bezogen jeweils auf die Mischung der festen Komponenten, in 15 bis 85 Gew.-% Wasser, bezogen auf die PIT-Emul-

2

sion, herstellt und auf das partikuläre Material aufsprüht. Hierbei ist es für die Herstellung der PIT-Emulsion wichtig, daß das Verhältnis der Komponenten (2) und (3) im Bereich von 0,5 : 1 bis 20 : 1 liegt.

Gegenstand der Erfindung ist daher ein Verfahren zur Hydrophobierung von partikulärem Material durch Auftrag von bei Raumtemperatur festen Hydrophobierungsmitteln in Form von PIT-Emulsionen, wobei man eine PIT-Emulsion aus

(1) 10 bis 80 Gew.-% eines festen Hydrophobierungsmittels,
(2) 0,5 bis 30 Gew.-% eines hydrophilen nichtionischen Dispergators und
(3) 1 bis 30 Gew.-% eines hydrophoben Co-Dispergators,

bezogen jeweils auf die Mischung der festen Komponenten, mit der Maßgabe, daß das Verhältnis der Komponenten (2) und (3) im Bereich von 0,5 : 1 bis 20 : 1 liegt, in 15 bis 85 Gew.-% Wasser, bezogen auf die PIT-Emulsion, auf partikuläres Material aufträgt.

Das erfindungsgemäße Verfahren hat den Vorteil, daß das partikuläre Material gleichmäßig und homogen vom Hydrophobierungsmittel eingeschlossen wird, da das Hydrophobierungsmittel in der PIT-Emulsion feinstverteilt vorliegt. Im Vergleich mit dem bekannten Stand der Technik zur Beschichtung von partikulärem Material sind auch die hohe Lagerstabilität der PIT-Emulsion, die sich in der nicht wahrnehmbaren Entmischungsgeschwindigkeit auch über Wochen hinweg zeigt, die geringe Umweltbelastung beim Versprühen und der deutlich gesenkte Energieverbrauch besonders von Vorteil. Weiterhin wird eine Temperaturbelastung des zu überziehenden Materials durch die Verdunstungskälte vermieden.

Als feste Hydrophobierungsmittel, d.h. Komponente (1), kommen sämtliche hydrophoben Stoffe in Frage, die bei 20°C fest und knetbar, grob- bis feinkristallin sind und erst oberhalb von etwa 40°C ohne Zersetzung in einen pastösen bis fließfähigen niedriger viskosen Zustand übergehen. Bevorzugte Hydrophobierungsmittel sind vor allem unpolare Lipide, insbesondere höherkettige Kohlenwasserstoffe (z.B. Paraffinum durum) und/oder Wachsester (z.B. Cetylpalmitat).

Als hydrophile nichtionische Dispergatoren, d.h. Komponente (2), eignen sich Stoffe, die einen HLB-Wert von 8 bis 18 aufweisen. Unter dem HLB-Wert (Hydrophil-Lipophil-Balance) soll ein Wert verstanden werden, der gemäß

$$HLB = (100-L)/5$$

errechnet werden kann, wobei L der Gewichtsanteil der lipophilen Gruppen, d.h. der Fettalkyl- oder Fettacylgruppen in Prozent in den Ethylenoxidanlagerungsprodukten ist. Geeignet sind vorzugsweise Ethylenoxidanlagerungsprodukte an $C_{16-22}$-Fettalkohole. Derartige handelsübliche Produkte stellen Gemische homologer Polyglycolether der Ausgangsfettalkohole dar. Als Dispergatoren können auch Ethylenoxidanlagerungsprodukte an Partialester aus einem Polyol mit 3 bis 6 C-Atomen und $C_{14-22}$-Fettsäuren verwendet werden. Insbesondere eignen sich als Dispergatoren (2) Fettalkoholpolyglycolether der allgemeinen Formel

$$R^1-(O-CH_2-CH_2)_n-OH,$$

in der $R^1$ einen gesättigten oder ungesättigten, geradkettigen oder verzweigten Kohlenwasserstoffrest mit 8 bis 22 C-Atomen, vorzugsweise 12 bis 22 C-Atomen und n eine ganze Zahl von 10 bis 50, vorzugsweise von 10 bis 30 bedeutet, sowie Anlagerungsprodukte von 4 bis 20 Mol Ethylenoxid an ein oder mehrere Fettsäurepartialglyceride.

Unter Fettsäurepartialglyceriden von gesättigten oder ungesättigten Fettsäuren mit 10 bis 20 C-Atomen sind dabei technische Gemische von Fettsäuremono-, di- und triglyceriden zu verstehen, die durch Veresterung von 1 Mol Glycerin mit 1 bis 2 Mol einer $C_{10-20}$-Fettsäure oder durch Umesterung von 1 Mol eine $C_{10-20}$-Fettsäuretriglycerids mit 0,5 bis 2 Mol Glycerin erhalten werden kann.

Bevorzugt geeignet als Dispergatoren sind Anlagerungsprodukte von 8 bis 12 Mol Ethylenoxid an gesättigte Fettalkohole mit 16 bis 22 C-Atomen.

Zusätzlich zum Dispergator (2) erfordert die Herstellung einer PIT-Emulsion, die für das erfindungsgemäße Verfahren geeignet ist, die Anwesenheit eines Co-Dispergators (3). Als Co-Dispergator sind solche vom Typ der Fettalkohole mit 16 bis 22 C-Atomen, z.B. Cetylalkohol, Stearylalkohol, Arachidylalkohol oder Behenylalkohol oder Gemische dieser Alkohole geeignet, wie sie bei der technischen Hydrierung von pflanzlichen oder tierischen Fettsäuren mit 16 bis 22 C-Atomen oder der entsprechenden Fettsäuremethylester erhalten werden. Weiterhin eignen sich als Co-Dispergatoren (3) Partialester aus einem Polyol mit 3 bis 6 C-Atomen und Fettsäuren mit 14 bis 22 C-Atomen. Solche Partialester sind z.B. die Monoglyceride von Palmitin und/oder Stearinsäure, die Sorbitanmono- und/oder -diester von Myristinsäure, Palmitinsäure, Stearinsäure oder von Mischungen dieser Fettsäuren, die Monoester aus Trimethylolpropan, Erythrit oder Pentaerythrit und gesättigte Fettsäuren mit 14 bis 22 C-Atomen. Als Monoester werden auch die technischen Monoester verstanden, die durch Veresterung von 1 Mol Polyol mit 1 Mol Fettsäure erhalten werden und die ein Gemisch aus Monoester, Diester und unverestertem Polyol darstellen.

Besonders gut eignen sich als Co-Dispergatoren Cetylalkohol, Stearylalkohol oder ein Glycerin-, Sorbitan- oder Trimethylolpropan-Monoester einer Fettsäure mit 14 bis 22 C-Atomen oder Gemische dieser Stoffe.

Wie bereits erwähnt ist das Verhältnis der Komponenten (2) und (3) ein für die Herstellung der PIT-Emulsion kritischer Parameter. Das Verhältnis von (2) und (3) soll im Bereich von 0,5 : 1 bis 20 : 1 liegen, wobei ein Bereich von 1 : 1 bis 10 : 1 bevorzugt ist. In einer besonders bevorzugten Variante des erfindungsgemäßen Verfahrens wird das Verhältnis der Komponenten (2) und (3) derart eingestellt, daß die Phaseninversionstemperatur der gesamten Zusammensetzung oberhalb des Schmelzpunktes des festen Hydrophobierungsmittels (1) und unterhalb von 100°C liegt.

Die Auftragung der PIT-Emulsion des Hydrophobierungsmittels auf das partikuläre Material kann in einer Wirbelschicht mittels einer Zweistoffdüse erfolgen, wobei das Substrat vorgelegt wird.

Das erfindungsgemäße Verfahren eignet sich vorzugsweise zur Beschichtung von Wasch- und Reinigungsmittelinhaltsstoffen. Hierbei kann über die Beschichtung ausgewählter Wasch- und Reinigungsmittelkomponenten dahingehend Einfluß auf den Waschprozeß genommen werden, daß die beschichteten und damit löseverzögerten Inhaltsstoffe ihre Wirkung zu einem bestimmten Zeitpunkt des Waschprozesses entfalten.

Unter Wasch- und Reinigungsmittelinhaltsstoffen, die nach dem erfindungsgemäßen Verfahren beschichtet werden können, werden alle in handelsüblichen Wasch- und Reinigungsmitteln verwendeten festen Stoffe verstanden, insbesondere Aniontenside, Niotenside, Builder, Organische Cobuilder, Bleichmittel, Schauminhibitoren, Enzyme, Vergrauungsinhibitoren, optische Aufheller und Mischungen aus diesen. Bevorzugt werden nach dem erfindungsgemäßen Verfahren diejenigen Wasch- und Reinigungsmittelinhaltsstoffe beschichtet, deren verzögerte Freisetzung deutliche Vorteile im Waschprozeß erbringt. Insbesondere ist eine Beschichtung von Bleichmitteln bevorzugt, da auf diese Weise die enzymatische und die oxidative Reinigung nacheinander erfolgen, so daß die Enzyme nicht durch die Bleichmittel zerstört werden.

In Wasch- und Reinigungsmittelzusammensetzungen enthaltene Bleichsysteme, die bevorzugt nach dem erfindungsgemäßen Verfahren zur verzögerten Freisetzung beschichtet werden können, sind vorwiegend Peroxybleichmittel und Bleichaktivatoren und/oder Katalysatoren.

Unter den als Bleichmittel dienenden, in Wasser $H_2O_2$ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie $H_2O_2$ liefernde persaure Salze oder Persäuren, wie Perbenzoate, Peroxophthalate, Diperazelainsäure, Phthaloiminopersäure oder Diperdodecandisäure. Der Gehalt der fertigen Mittel an Bleichmitteln beträgt vorzugsweise 5 bis 25 Gew.-% und insbesondere 10 bis 20 Gew.-%, wobei vorteilhafterweise Perboratmonohydrat oder Percarbonat eingesetzt wird.

Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat, 2,5-Diacetoxy-2,5-dihydrofuran und die aus den deutschen Patentanmeldungen DE 196 16 693 und DE 196 16 767 bekannten Enolester sowie acetyliertes Sorbitol und Mannitol beziehungsweise deren in der europäischen Patentanmeldung EP 0 525 239 beschriebene Mischungen (SORMAN), acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton, und/oder N-acylierte Lactame, beispielsweise N-Benzoylcaprolactam, die aus den internationalen Patentanmeldungen WO 94/27970, WO 94/28102, WO 94/28103, WO 95/00626, WO 95/14759 und WO 95/17498 bekannt sind. Die aus der deutschen Patentanmeldung DE 196 16 769 bekannten hydrophil substituierten Acylacetale und die in der deutschen Patentanmeldung DE 196 16 770 sowie der internationalen Patentanmeldung WO 95/14075 beschriebenen Acyllactame werden ebenfalls bevorzugt eingesetzt. Auch die aus der deutschen Patentanmeldung DE 44 43 177 bekannten Kombinationen konventioneller Bleichaktivatoren können eingesetzt werden. Derartige Bleichaktivatoren sind im üblichen Mengenbereich, vorzugsweise in Mengen von 1 Gew.-% bis 10 Gew.-%, insbesondere 2 Gew.-% bis 8 Gew.-%, bezogen auf gesamtes Mittel, enthalten.

Der Bleichaktivator kann in bekannter Weise mit Hüllsubstanzen überzogen oder, gegebenenfalls unter Einsatz von Hilfsmitteln, insbesondere Methylcellulosen und/oder Carboxymethylcellulosen, granuliert oder extrudiert/pelletiert worden sein und gewünschtenfalls weitere Zusatzstoffe, beispielsweise Farbstoff, enthalten. Vorzugsweise enthält ein derartiges Granulat über 70 Gew.-%, insbesondere von 90 bis 99 Gew.-% Bleichaktivator. Vorzugsweise wird ein Bleichaktivator eingesetzt, der unter Waschbedingungen Peressigsäure bildet.

Zusätzlich zu den oben aufgeführten konventionellen Bleichaktivatoren oder an deren Stelle können auch die aus den europäischen Patentschriften EP 0 446 982 und EP 0 453 003 bekannten Sulfonimine und/oder bleichverstärkende Übergangsmetallsalze beziehungsweise Übergangsmetallkomplexe als sogenannte Bleichkatalysatoren enthalten sein. Zu den in Frage kommenden Übergangsmetallverbindungen gehören insbesondere die aus der deutschen Patentanmeldung DE 195 29 905 bekannten Mangan-, Eisen-, Cobalt-, Ruthenium- oder Molybdän-Salenkomplexe und deren aus der deutschen Patentanmeldung DE 196 20 267 bekannte N-Analogverbindungen, die aus der deutschen Patentanmeldung DE 195 36 082 bekannten Mangan-, Eisen-, Cobalt-, Ruthenium- oder Molybdän-Carbonylkomplexe, die in der deutschen Patentanmeldung DE 196 05 688 beschriebenen Mangan-, Eisen-, Cobalt-, Rutherium-, Molybdän-, Titan-, Vanadium- und Kupfer-Komplexe mit stickstoffhaltigen Tripod-Liganden, die aus der deutschen Patentanmeldung DE 196 20 411 bekannten Cobalt-, Eisen-, Kupfer- und Ruthenium-Amminkomplexe, die in der deutschen Patentanmeldung DE 44 16 438 beschriebenen Mangan-, Kupfer- und Cobalt-Komplexe, die in der europäischen Patentanmeldung EP 0 272 030 beschriebenen Cobalt-Komplexe, die aus der europäischen Patentanmeldung EP 0 693 550 bekannten Mangan-Komplexe, die aus der europäischen Patentschrift EP 0 392 592 bekannten Mangan-, Eisen-, Cobalt- und Kupfer-Komplexe und/oder die in der europäischen Patentschrift EP 0 443 651 oder den europäischen Patentanmeldungen EP 0 458 397, EP 0 458 398, EP 0 549 271, EP 0 549 272, EP 0 544 490 und EP 0 544 519 beschriebenen Mangan-Komplexe. Kombinationen aus Bleichaktivatoren und Übergangsmetall-Bleichkatalysatoren sind beispielsweise aus der deutschen Patentanmeldung DE 196 13 103 und der internationalen Patentanmeldung WO 95/27775 bekannt. Bleichverstärkende Übergangsmetallkomplexe, insbesondere mit den Zentralatomen Mn, Fe, Co, Cu, Mo, V, Ti und/oder Ru, werden in üblichen Mengen, vorzugsweise in einer Menge bis zu 1 Gew.-%, insbesondere von 0,0025 Gew.-% bis 0,25 Gew.-% und besonders bevorzugt von 0,01 Gew.-% bis 0,1 Gew.-%, jeweils bezogen auf gesamtes Mittel, eingesetzt.

Weiterhin bevorzugt nach dem erfindungsgemäßen Verfahren beschichtete Wasch- und Reinigungsmittelinhaltsstoffe sind amorphe Silikate, die ihre Builderwirkung nur im festen Zustand besitzen. Während bei unbeschichteten amorphen Silikaten die Builderwirkung durch die Auflösung des Silikats schnell nachläßt, können nach dem erfindungsgemäßen Verfahren beschichtete und damit löseverzögerte amorphe Silikate deutlich länger ihre Builderwirkung entfalten. Vorzugsweise sind die amorphen Silikate hierbei kompaktiert, da auf diese Weise das gewünschte hohe Schüttgewicht im fertigen Waschmittel nicht erniedrigt wird.

Zu diesen bevorzugten Buildersubstanzen gehören amorphe Natriumsilikate mit einem Modul $Na_2O : SiO_2$ von 1:2 bis 1:3,3, vorzugsweise von 1:2 bis 1:2,8 und insbesondere von 1:2 bis 1:2,6, welche Sekundärwascheigenschaften aufweisen. Im Rahmen dieser Erfindung wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silikate, welche ebenfalls eine Löseverzögerung gegenüber den herkömmlichen Wassergläsern aufweisen, werden beispielsweise in der deutschen Patentanmeldung DE-A- 44 00 024 beschrieben.

Gegenstand der Erfindung sind außerdem Wasch- und Reinigungsmittel, welche mindestens einen nach dem erfindungsgemäßen Verfahren beschichteten Inhaltsstoff, vorzugsweise Bleichmittel, Bleichaktivator oder Bleichkatalysator, enthalten. Wasch- und Reinigungsmittelinhaltsstoffe im obigen Sinne sind einzelne in Wasch- und Reinigungsmitteln eingesetzte Rohstoffe oder Compounds aus mindestens 2 Rohstoffen. So können die beanspruchten Wasch- und Reinigungsmittel zusätzlich zu den nach dem erfindungsgemäßen Verfahren beschichteten Komponenten insbesondere Anionentenside, Niotenside, Gemini-Tenside, Builder, Organische Cobuilder, sogenannte soil repellents, alkalische Salze, Glycin, Schauminhibitoren, Phosphonate, Enzyme, Vergrauungsinhibitoren, optische Aufheller und gegebenenfalls weitere Bleichmittel enthalten.

Die erfindungsgemäß beanspruchten Wasch- und Reinigungsmittel enthalten vorzugsweise aber nicht ausschließlich neben mindestens einer nach dem erfindungsgemäßen Verfahren beschichteten Komponente Anionentenside, Niotenside, Builder, Organische Cobuilder, Schauminhibitoren, Enzyme, Vergrauungsinhibitoren, optische Aufheller und/oder Mischungen aus diesen.

Als anionische Tenside werden in Wasch- und Reinigungsmitteln vorzugsweise Alkylbenzolsulfonate (ABS), Alkansulfonate, Fettalkylsulfate (FAS), Seife und/oder Mischungen hiervon eingesetzt.

Als Tenside vom Sulfonat-Typ kommen vorzugsweise $C_9$-$C_{13}$-Alkylbenzolsulfonate, Olefinsulfonate, d.h. Gemische aus Alken- und Hydroxyalkansulfonaten sowie Disulfonaten, wie man sie beispielsweise aus $C_{12}$-$C_{18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht.

Geeignet sind auch Alkansulfonate, die aus $C_{12}$-$C_{18}$-Alkanen beispielsweise durch Sulfochlorierung oder Sulfoxidation mit anschließender Hydrolyse bzw. Neutralisation gewonnen werden. Die biologisch gut abbaubaren Alkansul-

fonate werden aus $C_{12}$-$C_{18}$-Alkanen beispielsweise durch Sulfochlorierung oder Sulfoxidation mit anschließender Hydrolyse bzw. Neutralisation gewonnen. Die Sulfonatgruppe ist dabei über die gesamte Kohlenstoffkette statistisch verteilt, wobei die sekundären Alkansulfonate überwiegen.

Als Alk(en)ylsulfate werden die Alkali- und insbesondere die Natriumsalze der Schwefelsäurehalbester der $C_{12}$-$C_{18}$-Fettalkohole beispielsweise aus Kokosfettalkohol, Talgfettalkohol, Lauryl-, Myristyl-, Cetyl- oder Stearylalkohol oder der $C_{10}$-$C_{20}$-Oxoalkohole und diejenigen Halbester sekundärer Alkohole dieser Kettenlänge bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind $C_{16}$-$C_{18}$-Alk(en)ylsulfate insbesondere bevorzugt. Dabei kann es auch von besonderem Vorteil und insbesondere für maschinelle Wasch- und Reinigungsmittel von Vorteil sein, $C_{16}$-$C_{18}$-Alk(en)ylsulfate in Kombination mit niedriger schmelzenden Aniontensiden und insbesondere mit solchen Aniontensiden, die einen niedrigeren Krafft-Punkt aufweisen und bei relativ niedrigen Waschtemperaturen von beispielsweise Raumtemperatur bis 40 °C eine geringe Kristallisationsneigung zeigen, einzusetzen. In einer bevorzugten Ausführungsform der Erfindung enthalten die Mittel daher Mischungen aus kurzkettigen und langkettigen Fettalkylsulfaten, vorzugsweise Mischungen aus $C_{12}$-$C_{14}$-Fettalkylsulfaten oder $C_{12}$-$C_{18}$-Fettalkylsulfaten mit $C_{16}$-$C_{18}$-Fettalkylsulfaten und insbesondere $C_{12}$-$C_{16}$-Fettalkylsulfaten mit $C_{16}$-$C_{18}$-Fettalkylsulfaten. In einer weiteren bevorzugten Ausführungsform der Erfindung werden jedoch nicht nur gesättigte Alkylsulfate, sondern auch ungesättigte Alkenylsulfate mit einer Alkenylkettenlänge von vorzugsweise $C_{16}$ bis $C_{22}$ eingesetzt. Dabei sind insbesondere Mischungen aus gesättigten, überwiegend aus $C_{16}$ bestehenden sulfierten Fettalkoholen und ungesättigten, überwiegend aus $C_{18}$ bestehenden sulfierten Fettalkoholen bevorzugt, beispielsweise solche, die sich von festen oder flüssigen Fettalkoholmischungen des Typs HD-Ocenol$^{(R)}$ (Handelsprodukt des Anmelders) ableiten. Dabei sind Gewichtsverhältnisse von Alkylsulfaten zu Alkenylsulfaten von 10:1 bis 1:2 und insbesondere von etwa 5:1 bis 1:1 bevorzugt.

Als weitere anionische Tenside kommen auch Seifen in Betracht. Geeignet sind insbesondere gesättigte Fettsäureseifen, wie die Salze der Laurinsäure, Myristinsäure, Palmitinsäure, Stearinsäure, hydrierten Erucasäure und Behensäure sowie insbesondere aus natürlichen Fettsäuren, z.B. Kokos-, Palmkern- oder Talgfettsäuren, abgeleitete Seifengemische.

Die anionischen Tenside (und Seifen) können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Nichtionische Tenside, die in Wasch- und Reinigungsmitteln eingesetzt werden, sind vorzugsweise ethoxylierte Fettalkohle (FAEO), Alkylpolyglycoside (APG), Glucamide, Polyhydroxyfettsäureamide (PHFA) und Aminoxide beziehungsweise Mischungen hiervon.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise $C_{12}$-$C_{14}$-Alkohole mit 3 EO oder 4 EO, $C_9$-$C_{11}$-Alkohole mit 7 EO, $C_{13}$-$C_{15}$-Alkohole mit 3 EO, 5 EO, 7 EO oder 8 EO, $C_{12}$-$C_{18}$-Alkohole mit 3 EO, 5 EO oder 7 EO und Mischungen aus diesen, wie Mischungen aus $C_{12}$-$C_{14}$-Alkohol mit 3 EO und $C_{12}$-$C_{18}$-Alkohol mit 7EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind (Talg-) Fettalkohole mit 14 EO, 16 EO, 20 EO, 25 EO, 30 EO oder 40 EO.

Außerdem können als weitere nichtionische Tenside auch Alkylglykoside der allgemeinen Formel RO(G)$_x$ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

In Wasch- und Reinigungsmittelzusammensetzungen eingesetzte Gerüststoffkomponenten umfassen insbesondere Zeolithe, Silikate, Phosphate und Co-Builder wie organische Polymere und/oder Citrate.

Der eingesetzte feinkristalline, synthetische und gebundenes Wasser enthaltende Zeolith ist vorzugsweise Zeolith A und/oder P. Als Zeolith P werden Zeolith MAP[(R)] (Handelsprodukt der Firma Crosfield) und Zeolith NaP (Handelsprodukt der Firma Degussa) besonders bevorzugt. Geeignet sind jedoch auch Zeolith X sowie Mischungen aus A, X und/oder P. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten $C_{12}$-$C_{18}$-Fettalkoholen mit 2 bis 5 Ethylenoxidgruppen, $C_{12}$-$C_{14}$-Fettalkoholen mit 4 bis 5 Ethylenoxidgruppen oder ethoxylierten Isotridecanolen. Geeignete Zeolithe weisen eine mittlere Teilchengröße von weniger als 10 μm (Volumenverteilung; Meßmethode: Coulter Counter) auf und enthalten vorzugsweise 18 bis 22 Gew.-%, insbesondere 20 bis 22 Gew.-% an gebundenem Wasser.

Geeignete Substitute bzw. Teilsubstitute für Phosphate und Zeolithe sind kristalline, schichtförmige Natriumsilikate der allgemeinen Formel $NaMSi_xO_{2x+1} \cdot yH_2O$, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilikate werden beispielsweise in der europäischen Patentanmeldung EP-A-0 164 514 beschrieben. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilikate $Na_2Si_2O_5 \cdot yH_2O$ bevorzugt.

Selbstverständlich ist auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate. Ihr Gehalt im allgemeinen nicht mehr als 25 Gew.-%, vorzugsweise nicht mehr als 20 Gew.-%, jeweils bezogen auf das fertige Mittel. In einigen Fällen hat es sich gezeigt, daß insbesondere Tripolyphosphate schon in geringen Mengen bis maximal 10 Gew.-%, bezogen auf das fertige Mittel, in Kombination mit anderen Buildersubstanzen zu einer synergistischen Verbesserung des Sekundärwaschvermögens führen.

Brauchbare organische Gerüstsubstanzen und Cobuilder sind beispielsweise die in Form ihrer Natriumsalze einsetzbaren Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelodextrine und Weißdextrine mit höheren Molmassen im Bereich von 2000 bis 30000. Ein bevorzugtes Dextrin ist in der britischen Patentanmeldung 94 19 091 beschrieben. Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Derartige oxidierte Dextrine und Verfahren ihrer Herstellung sind beispielsweise aus den europäischen Patentanmeldungen EP-A-0 232 202, EP-A-0 427 349, EP-A-0 472 042 und EP-A-0 542 496 sowie den internationalen Patentanmeldungen WO-A-92/18542, WO-A-93/08251, WO-A-94/28030, WO-A-95/07303, WO-A-95/12619 und WO-A-95/20608 bekannt. Ein an $C_6$ des Saccharidrings oxidiertes Produkt kann besonders vorteilhaft sein.

Beim Einsatz in maschinellen Waschverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an $C_{18}$-$C_{24}$-Fettsäuren aufweisen. Geeignete nichttensidartige Schauminhibitoren sind beispielsweise Organopolysiloxane und deren Gemische mit mikrofeiner, ggf. silanierter Kieselsäure sowie Paraffine, Wachse, Mikrokristallinwachse und deren Gemische mit silanierter Kieselsäure oder Bistearylethylendiamid. Mit Vorteilen werden auch Gemische aus verschiedenen Schauminhibitoren verwendet, z.B. solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche bzw. dispergierbare Trägersubstanz gebunden. Insbesondere sind dabei Mischungen aus Paraffinen und Bistearylethylendiamiden bevorzugt.

Als in Wasch- und Reinigungsmitteln vorkommende Enzyme kommen insbesondere solche aus der Klasse der Hydrolasen, wie der Proteasen, Esterasen, Lipasen bzw. lipolytisch wirkenden Enzyme, Amylasen, Cellulasen bzw.

andere Glykosylhydrolasen und Gemische der genannten Enzyme in Frage. Alle diese Hydrolasen tragen in der Wäsche zur Entfernung von Verfleckungen, wie protein-, fett- oder stärkehaltigen Verfleckungen, und Vergrauungen bei. Cellulasen und andere Glykosylhydrolasen können durch das Entfernen von Pilling und Mikrofibrillen zur Farberhaltung und zur Erhöhung der Weichheit des Textils beitragen. Zur Bleiche bzw. zur Hemmung der Farbübertragung können auch Oxidoreduktasen eingesetzt werden.

Besonders gut geeignet sind aus Bakterienstämmen oder Pilzen, wie Bacillus subtilis, Bacillus licheniformis, Streptomyces griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease- und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere $\alpha$-Amylasen, Iso-Amylasen, Pullulanasen und Pektinasen. Als Cellulasen werden vorzugsweise Cellobiohydrolasen, Endoglucanasen und $\beta$-Glucosidasen, die auch Cellobiasen genannt werden, bzw. Mischungen aus diesen eingesetzt. Da sich die verschiedenen Cellulase-Typen durch ihre CMCase- und Avicelase-Aktivitäten unterscheiden, können durch gezielte Mischungen der Cellulasen die gewünschten Aktivitäten eingestellt werden.

Die Enzyme können an Trägerstoffen adsorbiert und/oder in Hüllsubstanzen eingebettet sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,1 bis etwa 2 Gew.-% betragen.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw.. Auch Polyvinylpyrrolidon ist brauchbar. Bevorzugt werden jedoch Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, sowie Polyvinylpyrrolidon beispielsweise in Mengen von 0,1 bis 5 Gew.-%, bezogen auf die Mittel, eingesetzt.

Die Mittel können als optische Aufheller Derivate der Diaminostilbendisulfonsäure bzw. deren Alkalimetallsalze enthalten. Geeignet sind z.B. Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethimolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z.B. die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten Aufheller können verwendet werden.

**Beispiel**

**1. Herstellung einer PIT-Emulsion für das erfindungsgemäße Verfahren**

Eine PIT-Emulsion der unten angegebenen Zusammensetzung wurde nach folgendem Verfahren hergestellt: Paraffinum durum, Cutina GMS[R] und Mergital B 10[R] wurden zusammen mit der Wasserphase unter Rühren auf 95°C erhitzt und anschließend bis zum Erreichen der Raumtemperatur kaltgerührt. Die erhaltene PIT-Emulsion ist ein nahezu idealviskoses, wasserdünnes Produkt, das auch nach einer Woche Lagerung bei Raumtemperatur keine Anzeichen von Instabilität aufweist.

| | |
|---|---|
| Paraffinum durum (Smp. 51-53°C) | 27,7 Gew.-% |
| Glycerylmonostearat (Cutina GMS[R], Fa. Henkel, Düsseldorf) | 2,5 Gew.-% |
| ethoxylierter Behenylalkohol (Mergital B 10[R], Fa. Henkel, Düsseldorf) | 4,9 Gew.-% |
| Formalin, 37%ig | 0,15 Gew.-% |
| Wasser | 64,75 Gew.-% |

## 2. Beschichtung eines Bleichaktivators

Die Auftragung der PIT-Emulsion erfolgte in der Wirbelschicht mittels einer Zweistoffdüse auf das Modellsubstrat TAED-Granulat:

| | |
|---|---|
| Luftvolumenstrom: | 70 - 80 m$^3$/h |
| Eintrittstemperatur der Luft | 50°C |
| Austrittstemperatur der Luft | 35°C |
| Sprühluftstrom der Zweistoffdüse | 2 m$^3$/h |
| Auftragsgeschwindigkeit der PIT-Emulsion | 6 - 7 g/min |
| Auftragsmenge (g PIT-Emulsion / kg TAED) | 100 |
| Gehalt an Hydrophobierungsmittel im Produkt | 2,7 Gew.-% |

## 3. Nachweis der Hydrophobierung

Durch das vorbeschriebene Coating wird das granuläre Material (TAED) verlangsamt an ein Freisetzungsmedium abgegeben. Der Nachweis der Freisetzung erfolgte mittels iodometrischer Titration aus dem Freisetzungsmedium Normalwaschflotte: Hierzu wurden 3,6g eines handelsüblichen Colorwaschmittels, 1g Natriumperborat-Monohydrat und 0,4g TAED, entsprechend 5g Waschpulver in einem Liter Wasser bei 20°C gelöst und gerührt. Nach 5, 10 und 20 min wurde titriert, wobei der nach 30 min ermittelte Gehalt an Peressigsäure als 100% angenommen wurde.

| Inkubationsdauer | TAED unbehandelt | TAED mit 2,7% Paraffinum durum aus der PIT-Emulsion |
|---|---|---|
| prozentuale Freisetzung TAED [%] **nach 5 min** | 57 | 44 |
| prozentuale Freisetzung TAED [%] **nach 10 min** | 86 | 74 |

## Patentansprüche

**1.** Verfahren zur Hydrophobierung von partikulärem Material mit bei Raumtemperatur festem Hydrophobierungsmittel in Form von PIT-Emulsionen aus

(1) 10 bis 80 Gew.-% eines festen Hydrophobierungsmittels,
(2) 0,5 bis 30 Gew.-% eines hydrophilen nichtionischen Dispergators und
(3) 1 bis 30 Gew.-% eines hydrophoben Co-Dispergators,

bezogen jeweils auf die Mischung der festen Komponenten, in 15 bis 85 Gew.-% Wasser, bezogen auf die PIT-Emulsion, dadurch gekennzeichnet, daß das Verhältnis der Komponenten (2) und (3) im Bereich von 0,5 : 1 bis 20 : 1 liegt und die PIT-Emulsion auf das Material aufgetragen wird.

**2.** Verfahren nach Anspruch 1, dadurch gekennzeichnet, daß als Hydrophobierungsmittel höherkettige Kohlenwasserstoffe, insbesondere Paraffinum durum und/oder Cetylpalmitat, eingesetzt werden.

**3.** Verfahren nach Anspruch 1 oder 2, dadurch gekennzeichnet, daß der hydrophile nichtionische Dispergator einen HLB-Wert von 8 bis 18 aufweist.

**4.** Verfahren nach einem der Ansprüche 1 bis 3, dadurch gekennzeichnet, daß als Co-Dispergatoren Cetylalkohol, Stearylalkohol oder ein Glycerin-, Sorbitan- oder Trimethylpropan-Mono- oder Diester einer Fettsäure mit 14 bis 22 C-Atomen oder Gemische dieser Stoffe verwendet werden.

5. Verfahren nach einem der Ansprüche 1 bis 4, dadurch gekennzeichnet, daß das Verhältnis von (2) : (3) im Bereich von 1 : 1 bis 10 : 1 liegt.

6. Verfahren nach einem der Ansprüche 1 bis 5, dadurch gekennzeichnet, daß die Auftragung in einer Wirbelschicht erfolgt.

7. Verfahren nach einem der Ansprüche 1 bis 6, dadurch gekennzeichnet, daß Wasch- und Reinigungsmittelinhaltsstoffe zur verzögerten Wirkstoff-Freisetzung hydrophobiert werden.

8. Verfahren nach Anspruch 8, dadurch gekennzeichnet, daß man Bleichmittel oder Bleichmittelvorläufer mit dem Ziel der Trennung von enzymatischer und bleichender Reinigung in der Waschflotte hydrophobiert.

9. Wasch- und Reinigungsmittel-Inhaltsstoff, dadurch gekennzeichnet, daß er gemäß einem Verfahren der Ansprüche 1 bis 8 durch Auftragung eines bei Raumtemperatur festen Hydrophobierungsmittels in Form einer PIT-Emulsion beschichtet und hydrophobiert wurde.

10. Wasch- und Reinigungsmittel-Inhaltsstoff gemäß Anspruch 9, dadurch gekennzeichnet, daß es ein beschichtetes und hydrophobiertes Bleichmittel, Bleichmittelvorläufer oder Bleichaktivatoren ist.

11. Wasch- und Reinigungsmittel, enthaltend mindestens einen Inhaltsstoff gemäß Anspruch 9 oder 10.